# EUROPEAN PATENT SPECIFICATION

(11) **EP 2 865 745 B1**
(45) Date of publication and mention of the grant of the patent: **31.07.2024**
(21) Application number: 13807595.7
(22) Date of filing: 20.06.2013
(51) Int. Cl.: C12C 3/00, A23L 2/00, C12G 3/02

(54) **CARBONATED BEVERAGE CONTAINING HOPS OXIDATION REACTION PRODUCT EXTRACT**
KOHLENSÄUREHALTIGES GETRÄNK MIT EXTRAKT AUS EINEM HOPFENOXIDATIONSREAKTIONSPRODUKT
BOISSON CARBONATÉE CONTENANT UN EXTRAIT DE PRODUIT DE RÉACTION D'OXYDATION DU HOUBLON

(30) Priority: 20.06.2012 JP 2012139216
(43) Date of publication of application: 29.04.2015
(73) Proprietor: Kirin Holdings Kabushiki Kaisha, Tokyo (JP)
(72) Inventor: KANEKO, Yuji, Tokyo 164-0001 (JP); TANIGUCHI, Yoshimasa, Tokyo 164-0001 (JP); KATAYAMA, Mikio, Tokyo 164-0001 (JP)
(74) Representative: Hoffmann Eitle
(86) International application number: PCT/JP2013/067013
(87) International publication number: WO 2013/191264

(56) References cited:
- EP-A1- 2 653 041
- WO-A1-03/068205
- WO-A1-2004/020570
- WO-A1-2009/050905
- WO-A1-2010/143719
- WO-A1-2012/081675
- WO-A1-2012/081676
- WO-A1-2012/081676
- GB-A- 1 527 999
- JP-A- 2007 089 439
- JP-A- 2008 212 041
- JP-A- 2008 212 041
- JP-A- 2008 228 634
- JP-A- S 611 374
- DE CLERCK J: "The process of wort boiling", BREWERS DIGEST, vol. 42, no. 3, 1967, pages 96 - 99, XP008176040
- LAM KC ET AL.: "Aging of hops and their contribution to beer flavor", J. AGRIC. FOOD CHEM., vol. 34, no. 4, 1986, pages 763 - 770, XP055181812
- SRECEC S ET AL.: "HOP PELLETS TYPE 90: INFLUENCE OF MANUFACTURE AND STORAGE ON LOSSES OF a-ACIDS", ACTA ALIMENT., vol. 38, no. 1, 2009, pages 141 - 147, XP008175915
- PEACOCK V: "Fundamentals of hop chemistry, Technical Quarterly", MASTER BREWERS ASSOCIATION OF THE AMERICAS, vol. 35, no. 1, 1998, pages 4 - 8, XP008175904
- INTELMANN D ET AL.: "On the Autoxidation of Bitter-Tasting Iso-a-acids in Beer", J. AGRIC. FOOD CHEM., vol. 58, no. 8, 2010, pages 5059 - 5067, XP055181827
- GARCIA-VILLALBA R ET AL.: "Analysis of Hop Acids and Their Oxidized Derivatives and Iso- a-acids in Beer by Capillary Electrophoresis- Electrospray Ionization Mass Spectrometry", J. AGRIC. FOOD CHEM., vol. 54, no. 15, 2006, pages 5400 - 5409, XP055128817
- WARTGEN K ET AL.: "Tricyclooxyisohumulone: a new autoxidation product of humulone", PLANTA MEDICA, vol. 57, no. 5, 1991, pages 498 - 499, XP000574311
- VERZELE M ET AL.: "High performance liquid chromatography analysis of colupulone oxidation products in hops and in beer", JOURNAL OF THE AMERICAN SOCIETY OF BREWING CHEMISTS, vol. 41, no. 2, 1983, pages 57 - 60, XP008175914
- TANIGUCHI Y ET AL.: "Identification and Quantification of the Oxidation Products Derived from a-Acids and beta-Acids During Storage of Hops (Humulus lupulus L.)", J. AGRIC. FOOD CHEM., vol. 61, no. 12, 27 March 2013 (2013-03-27), pages 3121 - 3130, XP055181837

## Description

### BACKGROUND OF THE INVENTION

In effervescent beverages such as sparkling liquor, non-alcoholic beverage and beer, it has been conventionally known that the foam in the beverages give great influence to the appearance and taste of the beverages. For example, the foam imparts properties to cause a comfortable feeling with the sound of bubbles popping, to enhance an aroma by sparkling, and to provide a delicious-looking appearance to effervescent beverages, as well as prevent carbon dioxide gas from escaping. Moreover, in cases where effervescent beverages are poured into a glass or a beer mag, the foam achieves an antioxidation effect in the beverages.

Recently, various measures to improve the quality of foam have been studied for the purpose of improving the appearance and taste of effervescent beverages. For example, an effervescent beverage using 0.05-3% by weight of a starch octenylsuccinate as a foaming agent has been reported in Unexamined Japanese Patent Application No. 2004-81171 (Patent Literature 1). However, mixing a certain amount of a starch octenylsuccinate with a beverage, which amount is required to feel a sense of sparkling at a sufficient level, may cause to feel a sense of stickiness and a decreased sensation in a mouth and a reduced smoothness to the throat while drinking it. Moreover, both the solubility (transparency) in beverages and the thermal durability of starch octenylsuccinates are simply at a low level, so that starch octenylsuccinates are sometimes difficult to use depending on the type of a beverage for improving the quality of foam.

Moreover, a type of sparkling mixed liquor prepared by containing a saponin ingredient and carbon dioxide gas has been reported in Unexamined Japanese Patent Application Publication No. S61-88869 (Patent Literature 2). However, saponins have a problem, in which they have a strong bitter taste and spoil the taste of a beverage.

Moreover, 25th Anniversary Review: The Role of Hops in Brewing, JOURNAL OF THE INSTITUTE OF BREWING, Vol. 117, No. 3, 2011 (Non Patent Literature 1) has reported that components of hops such as iso-α-acids have an effect to enhance foam retention. However, the components of hops such as iso-α-acids have a strong bitter taste and may change the flavor of a beverage.

Moreover, Developments in food science, Chemistry and analysis of hop and beer bitter acids, M. Verzele (Non Patent Literature 2) has reported that abeo-isohumulone has a less bitter taste and an effect to improve foam retention in alcohol beverages. However, a high dose of abeo-isohumulone around 0.009-0.016% (w/w) is required to be used for improvement of foam retention in beverages. Moreover, the isolation and preparation of abeo-isohumulone is considered to be difficult.

In addition, JP2008 212041 A (D2) discloses a method of manufacturing a foamable alcoholic beverage wherein hop stored at high temperatures is used.

WO2004/020570 A1 (D3) discloses effervescent formulations of hop adjunct for use in the process of beer brewing, or more generally the manufacture or production of malt beverages.

GB1527999 A (D4) discloses process for the manufacture of bitter drinks.

Under such technical conditions, a measure to improve the quality of foam in effervescent beverages in an efficient manner is still considered to be required.

### Background Art

### Patent Literatures

Patent Literature 1: Unexamined Japanese Patent Application Publication No. 2004-81171
Patent Literature 2: Unexamined Japanese Patent Application Publication No. S61-88869
D2: JP2008 212041 A
D3: WO2004/020570 A1
D4: GB1527999 A

### Non Patent Literatures

Non Patent Literature 1: 25th Anniversary Review: The Role of Hops in Brewing, JOURNAL OF THE INSTITUTE OF BREWING, Vol. 117, No. 3, 2011.

Non Patent Literature 2: Developments in food science, Chemistry and analysis of hop and beer bitter acids, M. Verzele.

### SUMMARY OF THE INVENTION

The inventors have extensively studied this time and eventually found that degradation products obtained by oxidation of hops greatly reduce the contents of foam retention-enhancing substances such as iso-α-acids but, nevertheless, can efficiently improve the quality of foam in beverages and give the beverages an excellent appearance and a good sensation perceived when drinking the beverages. The present invention is based on these findings.

Herein, the quality of foam in a beverage means a comprehensive evaluation score on the amount of foam, the foam retention time, the quality of foam in a narrow sense (appearance such as fineness of bubbles), and the sense of sparkling (a sensation perceived when drinking a beverage) of a beverage. However, in Examples, the appearance such as fineness of bubbles will be sometimes evaluated as the quality of foam in a narrow sense.

Accordingly, an object of the present invention is to provide a new type of effervescent beverage comprising a hop oxidation-reaction product.

According to the present invention, the following inventions are provided:
(1) An effervescent beverage which provides foam with improved quality, comprising a hop oxidation-reaction product, wherein the hop oxidation reaction product is an extract of a hop oxidation reaction product wherein said extract is obtainable by subjecting oxidized hops to extraction with water, water-containing organic solvents or polar organic media such as ethanol, and
   wherein the amount of said extract is such that the total content of oxidation products of α-acids, oxidation products of iso-α-acids and oxidation products of β-acids in the beverage is 10-400 ppm and/or wherein the concentration of the hop oxidation-reaction product in the beverage is in the range of 10-500 ppm;
(2) The effervescent beverage according to (1), wherein the ratio of the area of peaks corresponding to iso-α-acids, α-acids and β-acids relative to the total area of all the peaks detected by HPLC analysis is not more than 20% in the hop oxidation-reaction product;
(3) The effervescent beverage according to any one of (1) to (2), wherein the extract of a hop oxidation-reaction product is an aqueous medium extract of a hop oxidation-reaction product;
(4) A method of producing an effervescent beverage which provides foam with improved quality, comprising the step of allowing the beverage to contain a hop oxidation-reaction product, wherein the hop oxidation reaction product is an extract of a hop oxidation reaction product wherein said extract is obtainable by subjecting oxidized hops to extraction with water, water-containing organic solvents or polar organic media such as ethanol, and
   wherein the amount of said extract is such that the total content of oxidation products of α-acids, oxidation products of iso-α-acids and oxidation products of β-acids in the beverage is 10-400 ppm;
(6) Use of an extract of a hop oxidation-reaction product as an agent for improving the quality of foam for an effervescent beverage, wherein the hop oxidation reaction product is an extract of a hop oxidation reaction product wherein said extract is obtainable by subjecting oxidized hops to extraction with water, water-containing organic solvents or polar organic media such as ethanol, and
   wherein the amount of said extract is such that the total content of oxidation products of α-acids, oxidation products of iso-α-acids and oxidation products of β-acids in the beverage is 10-400 ppm;
(7) The use according to (6), wherein the above-described extract of a hop oxidation-reaction product is an aqueous medium extract of a hop oxidation-reaction product.

The present invention can efficiently improve the quality of foam in beverages and give the beverages an excellent appearance and a good sensation perceived when drinking the beverages. Moreover, the hop oxidation-reaction product of the present invention has little flavor and, furthermore, the amount of the hop oxidation-reaction product to be added is at a low level, and, therefore, the hop oxidation-reaction product of the present invention is advantageous in improving the quality of foam without changing the flavor of beverages. Moreover, the hop oxidation-reaction product of the present invention has a low viscosity and, therefore, is advantageous in realizing a good sensation in a mouth and an excellent sense of smoothness to the throat in beverages. Moreover, the hop oxidation-reaction product of the present invention has a good solubility and excellent thermal durability, therefore, which are advantageous for the hop oxidation-reaction product in producing effervescent beverages.

### BRIEF DESCRIPTION OF THE DRAWINGS

FIG. 1A is a HPLC chart of products obtained by oxidation of hops (Example 1).
FIG. 1B is a magnified view of the HPLC chart of products obtained by oxidation of hops (Example 1).
FIG. 2A is a HPLC chart of hops without oxidation.
FIG. 2B is a magnified view of the HPLC chart of hops without oxidation.
FIG. 3 is a HPLC chart of products obtained by oxidation of hops at a low temperature (Example 5).
FIG. 4 is a magnified view of the HPLC chart of products obtained by oxidation of hops (Example 11). The letter A corresponds to tricyclooxyisocohumulone, the letter B corresponds to tricyclooxyisoadhumulone, and the letter C corresponds to tricyclooxyisohumulone.
FIG. 5 is a graph showing the relationship between the total content of oxidation products of α-acids, oxidation products of iso-α-acids and oxidation products of β-acids and the content of TCOIHs (tricyclooxyisocohumulone, tricyclooxyisohumulone and tricyclooxyisoadhumulone) in products obtained by oxidation of hops under multiple conditions.

### DETAILED DESCRIPTION OF THE INVENTION

### [Hop oxidation-reaction products]

In the present invention, hop oxidation-reaction products represent products obtained by subjecting hops or hop products (such as, hop pellet) to oxidation. Hop oxidation-reaction products provided by the present invention can be obtained by, for example, bringing hops into contact with the oxygen in the air and thereby oxidizing the hops. In the present invention, oxidation is not particularly limited, but oxidation can be performed in terms of oxidization efficiency preferably under conditions of 60-80°C and 8-120 hours. A procedure of oxidation will be described below. Moreover, in the present invention, hops may have any form as long as they contain lupulin part and harvested hops before drying, harvested and dried hops, compressed hops, crushed hops, hops processed into pellet form and the like can be used. Moreover, pellets containing selectively concentrated lupulin glands can be also used. Furthermore, pellets subjected to isomerization treatment can also be used.

Hop contains acidic resin components such as α-acids (humulones), β-acids (luplones) and iso-α-acids (isohumulones). In the present invention, "humulones" is used as a term which means compounds including humulone, adhumulone, cohumulone, posthumulone and prehumulone. Moreover, in the present invention, "luplones" is used as a term which means compounds including luplone, adluplone, coluplone, postluplone and preluplone. Furthermore, in the present invention, "isohumulones" is used as a term which means compounds including isohumulone, isoadhumulone, isocohumulone, isoposthumulone, isoprehumulone, Rho-isohumulone, Rho-isoadhumulone, Rho-isocohumulone, Rho-isoposthumulone, Rho-isoprehumulone, tetrahydroisohumulone, tetrahydroisoadhumulone, tetrahydroisocohumulone, tetrahydroisoprehumulone, tetrahydroisoposthumulone, hexahydroisohumulone, hexahydroisoadhumulone, hexahydroisocohumulone, hexahydroisoposthumulone and hexahydroisoprehumulone. In addition, *cis-* and *trans-stereoisomers* exist in isohumulones and "isohumulones" is used as a term which means compounds including both, unless otherwise specifically stated.

According to Examples described below, subjecting hops to oxidation reduces the contents of α-acids, β-acids and iso-α-acids and increases the contents of components other than those. Thus, examples of a "hop oxidation-reaction product" include, out of oxidation products, a hop oxidation-reaction product showing a ratio of the area of peaks corresponding to α-acids, β-acids and iso-α-acids relative to the total area of all the peaks in HPLC of preferably not more than 20%, more preferably not more than 10%, and further preferably not more than 5%, in cases where HPLC analysis similar to that in Example 1 is performed.

Other components, in addition to α-acids, β-acids and iso-α-acids, contained in an oxidation product of the present invention can be readily detected by well-known analytical measures such as HPLC. For example, other compounds, in addition to α-acids, β-acids and iso-α-acids, are contained in a hop oxidation-reaction product prepared by procedures described in Example 1 and can show an excellent effect to improve the quality of foam as indicated in Examples 6 and 7, particularly in cases where the other compounds are in the form of an extract as described below. Thus, examples of a oxidation product of the present invention include, out of oxidation products, a hop oxidation-reaction product showing a ratio of the area of peaks corresponding to components excluding α-acids, β-acids and iso-α-acids relative to the total area of all the peaks in HPLC of preferably not less than 80%, more preferably not less than 90%, and further preferably not less than 95%, in cases where HPLC analysis as described in Example 1 is performed.

It has been found that the hop oxidation-reaction product of the present invention may contain, for example, fatty acids and the like according to treatment conditions or aspects of ingestion, which have been generated through the oxidation of humulones and the like, and unpleasant odors as expressed by oxidized odor or scorch smell may prevent ingestion. Thus, the oxidation product of the present invention is preferably an oxidized product from which unpleasant odors have been removed. A procedure to remove unpleasant odors will be described below.

### [Extracts of hop oxidation-reaction products]

The present invention also relates to the use of a hop oxidation-reaction product as an agent for improving the quality of foam for an effervescent beverage, wherein the hop oxidation reaction product is an extract of a hop oxidation reaction product wherein said extract is obtainable by subjecting oxidized hops to extraction with water, water-containing organic solvents or polar organic media such as ethanol. Examples of organic solvents include lower alcohols having 1-4 carbon atoms such as methanol, ethanol, propanol and butanol; lower alkyl esters such as ethyl acetate ester; glycols such as ethylene glycol, butylene glycol, propylene glycol, glycerin and the like; as well as, polar solvents such as acetone, acetic acid and the like; hydrocarbons such as benzene and hexane and the like; non-polar solvents including ethers such as ethyl ether and petroleum ether; and the like, and, in consideration of removal of unpleasant odors described below, preferable examples are aqueous media, more preferable examples are water-containing organic solvents such as water or polar organic solvents or mixtures thereof, and a more preferable example is water. The hop oxidation-reaction product of the present invention in the form of an extract is advantageous in that storage stability is enhanced as well as the oxidation product can be used at a high concentration.

An extract of the hop oxidation-reaction product of the present invention preferably contains oxidation products of α-acids, oxidation products of iso-α-acids and oxidation products of β-acids. Moreover, the extract of the hop oxidation-reaction product of the present invention contains "tricycloisohumulones and the like." Herein, "tricycloisohumulones and the like" refers to a compound group including tricyclooxyisocohumulone (TCOIcoH: Formula 1), tricyclooxyisohumulone (TCOIH: Formula 2), and tricyclooxyisoadhumulone (TCOIadH: Formula 3). In the present specification, TCOIcoH, TCOIH and TCOIadH are hereinafter collectively referred to as TCOIHs.

An excellent effect to improve the quality of foam can be achieved in beverages according to the extract of the hop oxidation-reaction product of the present invention. Moreover, the extract of the hop oxidation-reaction product of the present invention is preferable, because the extract of the hop oxidation-reaction product of the present invention prolongs foam retention time when the extract is added to a beverage, as compared with the foam retention time in a beverage to which the extract has not been added.

### [Preparation of hop oxidation-reaction products]

### Oxidation

Oxidation products of the present invention can be produced by oxidizing hops.

Oxidation is performed preferably by leaving hops in the air or heating hops in the air. The heating temperature is not particularly limited, but the preferable upper limit is 100°C, and the more preferable upper limit is 80°C. A heating temperature of not more than 100°C is advantageous for progression of oxidization in preference to isomerization. Moreover, the preferable lower limit of heating temperature is 60°C. A heating temperature of not less than 60°C is advantageous for progression of oxidation in an efficient manner. Moreover, the reaction period is also not particularly limited, and can be appropriately determined depending on the variety of hop and the reaction temperature. For example, when the reaction temperature is at 60°C, a reaction period of 48-120 hours is preferred; and when the reaction temperature is at 80°C, a reaction period of 8-24 hours is preferred. Furthermore, the shape of hops is not particularly limited as long as they can be brought into contact with the oxygen in the air, but the reaction time can be shortened preferably by processing hops into powdery form. Moreover, hops may be left, that is, stored in the environment at high temperature.

Oxidation can change α-acids, β-acids and iso-α-acids contained in hops to oxidation products thereof. The extent of oxidation in each of these components can be analyzed and identified by HPLC and the like.

Hops subjected to oxidation are commercially available as an additive for beer and commercial hop products can be used in the present invention. For example, hop strobilus compressed into pellet form (Type 90 pellet), pellets in which lupulin glands have been selectively concentrated (Type 45 pellet), or hop pellets subjected to isomerization treatment (for example, Isomerized Pellets (Hopsteiner Trading Co., Ltd)), and the like can be used.

### [A removal process of unpleasant odors/Preparation of an extract from which unpleasant odors have been removed]

Oxidation products obtained by subjecting hops to oxidation have unpleasant odors and may causes an adverse effect according to aspects of ingestion and, therefore, a removal process may be performed on unpleasant odors generated by the oxidation.

Subjecting oxidized hops to extraction in water, water-containing organic solvents or polar organic media (such as, ethanol) can remove unpleasant odors and extract a hop oxidation-reaction product. The obtained extract is an extract of the hop oxidation-reaction product. This method is quite simple and efficient, which is an advantage of the method. The extraction temperature is not particularly limited, but preferably at 60°C or less, and more preferably in a range of 50-60°C in terms of extraction efficiency. The extracted oxidation products of hops can be filtrated through filter paper and the like to remove insoluble components and concentrated to provide an extract. The extract can advantageously be used for foods and/or beverages or the like.

### [An agent for improving the quality of foam/A beverage with improved quality of foam]

Moreover, an aspect of the present invention provides an agent for improving the quality of foam, which comprises a hop oxidation-reaction product (preferably an extract of a hop oxidation-reaction product). The agent of the present invention to improve the quality of foam contains a hop oxidation-reaction product (preferably an extract of a hop oxidation-reaction product) as active ingredients thereof and can effectively improve the quality of foam in a beverage, in which an effect to improve the quality of foam is required, by being added to the beverage. Here, the extract of a hop oxidation-reaction product is preferably an extract in an aqueous medium, more preferably an extract in a water-containing organic solvent or an extract in water, and further preferably an extract in water, of a hop oxidation-reaction product. The effect to improve the quality of foam in the present invention is not particularly limited, but examples of the effect include, for example, improvement in foam retention, improvement in fineness of the foam, improvement in appearance, improvement in a sensation perceived when drinking a beverage, improvement in appearance suggestive of champagne, and the like. Thus, according to one aspect, the agent of the present invention to improve the quality of foam is an agent for improving the foam retention, an agent for improving the fineness of the foam, an agent for improving the appearance, an agent for improving the sensation perceived when drinking a beverage or an agent for improving the appearance suggestive of champagne.

Moreover, in the agent of the present invention to improve the quality of foam, an extract of a hop oxidation-reaction product (for example, an extract of oxidized hops in an aqueous medium and the like) itself may be used as an agent for improving the quality of foam and other additives acceptable in terms of food hygiene may be further contained.

The above-described other additives acceptable in terms of food hygiene are not particularly limited, but, for example, colorants, preservatives, thickening agents, antioxidants, acidifiers, emulsifiers, impact modifiers, agents for food production, and flavors and the like may be appropriately added.

Moreover, the agent of the present invention to improve the quality of foam may be in the form of any of liquid, powder, granule and the like.

The content of an extract of a hop oxidation-reaction product in the agent of the present invention to improve the quality of foam is not particularly defined, but can be determined to be, for example, 10-100% by mass on the dry-weight basis. Application of the hop-derived agent of the present invention to improve the quality of foam is for effervescent beverages.

### Beverages

Moreover, an aspect of the present invention provides an effervescent beverage comprising a hop oxidation-reaction product (preferably an extract of a hop oxidation-reaction product).

The beverage of the present invention preferably comprises oxidation products of α-acids, oxidation products of iso-α-acids and oxidation products of β-acids and/or TCOIHs.

The total content of oxidation products of α-acids, oxidation products of iso-α-acids and oxidation products of β-acids in the beverage of the present invention is in a range of 10-400 ppm, and preferably of 50-400 ppm and/or the concentration of the hop oxidation-reaction product in the beverage is in the range of 10-500 ppm.

Moreover, the content of TCOIHs in the beverage of the present invention is preferably in a range of 0.01-75 ppm, more preferably of 0.1-60 ppm, further preferably of 0.1-50, and still further preferably of 0.1-0.40 ppm.

In the step of allowing the beverage to contain the hop oxidation-reaction product of the present invention (preferably an extract of the hop oxidation-reaction product), the hop oxidation-reaction product (preferably an extract of the hop oxidation-reaction product) may be added to the final product of the beverage, to the beverage before and during the production process of the beverage, and oxidized hops may be directly extracted during the production process, and the production process of the beverage may comprise a heating step (for example, boiling step). Moreover, the hop oxidation-reaction product of the present invention (preferably an extract of the hop oxidation-reaction product) may be added to the beverage immediately before ingestion. Furthermore, the hop oxidation-reaction product of the present invention (preferably an extract of the hop oxidation-reaction product) may be divided into two or more doses and be added to the beverage at multiple time points.

Moreover, in the procedure to allow the beverage to contain a hop oxidation-reaction product (preferably an extract of a hop oxidation-reaction product), the hop oxidation-reaction product of the present invention may be added to the beverage, the beverage may be added to the hop oxidation-reaction product of the present invention (preferably an extract of the hop oxidation-reaction product), or a mixture of the beverage and the hop oxidation-reaction product of the present invention (preferably an extract of the hop oxidation-reaction product) may be used. Adding the beverage to the hop oxidation-reaction product of the present invention (preferably an extract of the hop oxidation-reaction product) also includes, for example, an aspect in which the beverage is added to a container in which the hop oxidation-reaction product of the present invention (preferably an extract of the hop oxidation-reaction product) has already been placed.

The beverage in which the hop oxidation-reaction product of the present invention (preferably an extract of the hop oxidation-reaction product) is contained is not particularly limited and the beverage may be a beverage comprising other food ingredients including seasoning or other agents to improve the quality of foam, or the like. The beverage of the present invention is an effervescent beverage, and specific examples of the beverage of the present invention may be alcohol-containing beverages or alcohol-free beverages and include, for example, cider, soda pop beverages, cola beverages, carbonated beverages with fruit juice, refreshing beverages, low-alcohol beverages (such as, beer, sparkling liquor, sour with an alcohol content of 12% or less, cocktails, shochu highballs), non-alcoholic beer, and the like. These beverages may be soda water-based effervescent beverages. Preferred examples of the beverage of the present invention are preferably alcohol-free beverages (non-alcoholic beverages), in which an effect to increase the amount of foam is significant. In addition, the hop oxidation-reaction product of the present invention (preferably an extract of the hop oxidation-reaction product) may be applied to foods and drinks other than beverages and the present invention also encompasses such an aspect.

An amount of the hop oxidation-reaction product of the present invention, which is an extract of the hop oxidation-reaction product, to be added to beverages is not particularly limited as long as the content of oxidation products of α-acids, oxidation products of iso-α-acids and oxidation products of β-acids in the beverage is 10-400 ppm and/or the amount of the hop oxidation-reaction product is in a range of 10-500 ppm. It can be appropriately determined depending on the subject to be added, the type and the characters of supply source by one skilled in the art and is, for example, preferably in a range of 20-200 ppm, to the total volume of a beverage on the basis of the dry-weight of an extract of the hop oxidation-reaction product.

Moreover, an aspect of the present invention provides a method of producing a beverage which provides foam with improved quality, which method comprises the step of allowing the beverage to contain the hop oxidation-reaction product of the present invention (preferably an extract of the hop oxidation-reaction product).

Moreover, another aspect of the present invention provides a method of improving the quality of foam in a beverage, which method comprises the step of allowing the beverage to contain the hop oxidation-reaction product of the present invention (preferably an extract of the hop oxidation-reaction product).

The method of the present invention to produce a beverage and the method of the present invention to improve the quality of foam can be performed according to the above-described descriptions relating to the beverage of the present invention.

In addition, in cases where other additives which can be used for beverages are contained, in addition to a hop oxidation-reaction product (preferably an extract of a hop oxidation-reaction product), in a beverage, the other additives may be added to the beverage simultaneously with the hop oxidation-reaction product (preferably an extract of the hop oxidation-reaction product) or separately. Furthermore, a mixture of a hop oxidation-reaction product (preferably an extract of a hop oxidation-reaction product) and other additives which can be used for beverages may be added to the beverage.

### EXAM PLES

The present invention will be specifically described based on the following Examples but is not limited to these Examples.

### Example 1: Preparation of oxidized hops (Preparatory Example)

Hallertau Perle hops (HPE variety) in the form of a pellet were provided for studies. Hops were crushed in a mill and heating reaction at 80°C was maintained for a time period of up to 24 hours. The obtained product was subjected to the following pre-treatment and then to HPLC analysis.

### [Pre-treatment for analysis of a reaction product]

The collected product was added in ethanol to a concentration of 10% (w/v) and extracted at 50°C for 1 hour. The obtained extract liquid was diluted 10 times with ethanol.

### [Components of HPLC apparatus]

Pump: LC-10ADvp×3 (SHIMADZU)
Degasser: DGU-20A5 (SHIMADZU)
System controller: CBM-20A (SHIMADZU)
Autosampler: SIL-20ACHT (SHIMADZU)
Column oven: CTO-20AC (SHIMADZU)
Photodiode array detector: SPD-M20A (SHIMADZU)
Waveform analysis software: LCsolution (SHIMADZU)

### [HPLC conditions]

Column: Alltima C18 2.1 mm I.D. × 100 mm, particle size: 3 µm Flow rate: 0.6 mL/min
Elution solvents A: water/phosphoric acid, 1000/0.2, (v/v) + EDTA (free form) 0.02% (w/v)
Elution solvents B: acetonitrile
Elution solvents C: water
Injection volume: 3 µL
Column temperature: 40°C
Detection wavelength: 270 nm (oxidation products, α-acids, iso-α-acids, β-acids)
Gradient program:

### [Table 1]

**Table 1**

| | Composition of the mobile phase (%) | | |
|---|---|---|---|
| Time (min) | A | B | C |
| 0 | 90 | 10 | 0 |
| 26.67 | 48 | 52 | 0 |
| 30 | 25 | 75 | 0 |
| 32.67 | 15 | 85 | 0 |
| 37.67 | 15 | 85 | 0 |
| 37.68 | 0 | 10 | 90 |
| 41.3 | 0 | 10 | 90 |
| 41.31 | 90 | 10 | 0 |
| 51 | stop | | |

(The steps after 37.68 min comprise a washing step and an equilibration step.)

Calculated was the ratio (%) of the area value of peaks corresponding to α-acids, β-acids and iso-α-acids relative to the total area value (mAU•min) of all the peaks detected at a detection wavelength of 270 nm under the above-described analysis conditions. At the time of waveform analysis, areas corresponding to solvent peaks and a negative peak caused by injection shock were excluded from the subject areas of the analysis.

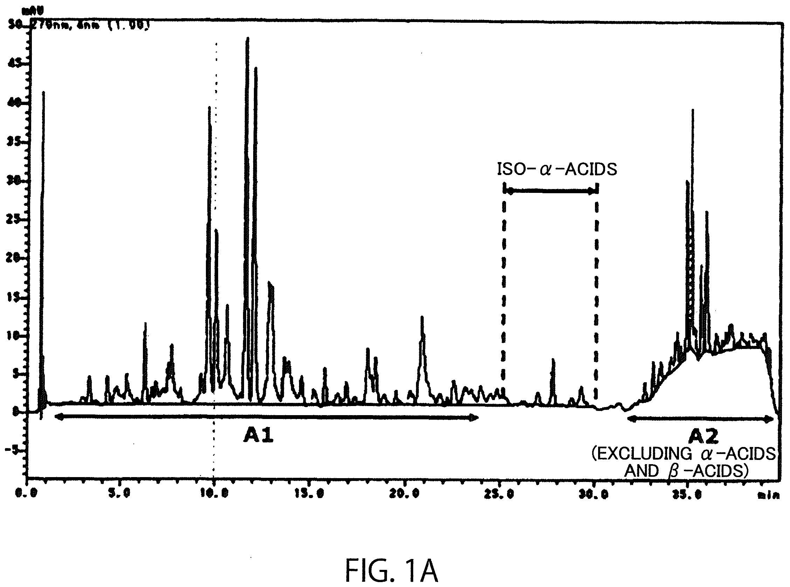

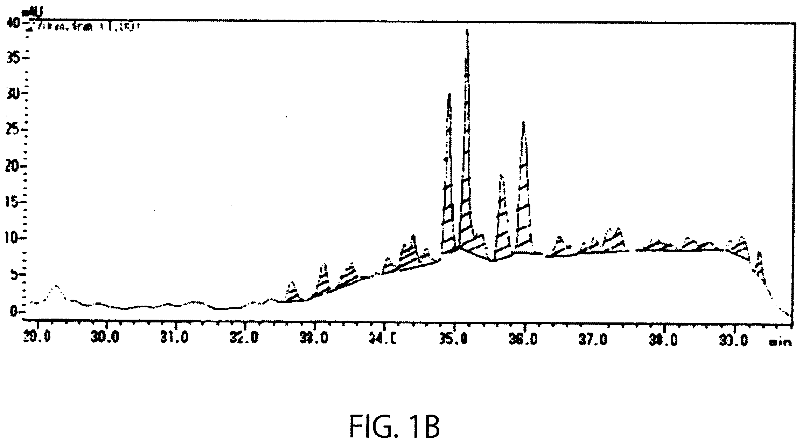

A HPLC chromatogram of the analysis of the above-described product of Example 1 is shown in FIG. 1A. Moreover, a magnified view of the chromatogram is shown in FIG. 1B and the area used for analysis, which corresponds to a period of time starting at 30 minutes, is indicated by diagonal lines.

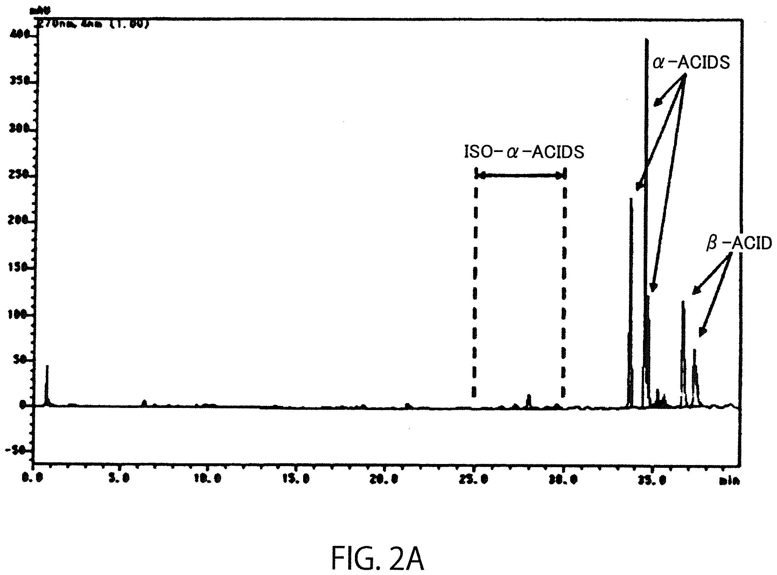

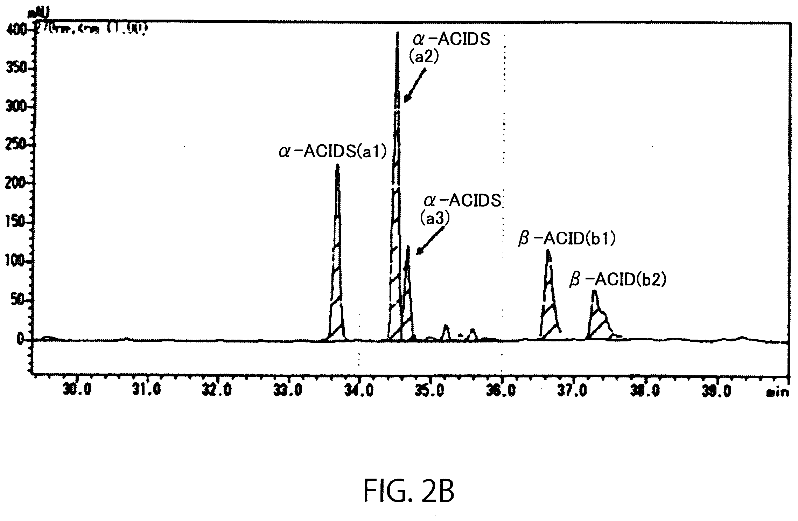

A chromatogram of the analysis of a product to which the oxidation has not been performed is shown in FIG. 2A. Moreover, a magnified view of the chromatogram is shown in FIG. 2B. The peaks corresponding to α-acids and β-acids were based on the retention times of α-acids (a1, a2, a3) and β-acids (b1, b2) observed at this analysis. The signs a1, a2 and a3 represent cohumulone, humulone and adhumulone in order, respectively; and the signs b1 and b2 represent coluplone, and luplone and adluplone, respectively.

The ratio (%) of the area value of peaks corresponding to α-acids, β-acids and iso-α-acids relative to the total area value (mAU•min) of all the peaks detected at a detection wavelength of 270 nm in each analysis sample was as shown Table 2.

### [Table 2]

**Table 2**

| Reaction conditions | Peak area ratio (%) (the peaks corresponding to o-acids, β-acids and iso-o-acids/all the peaks) |
|---|---|
| 80°C, 24 hours | 3.0 |
| untreated | 88.9 |

As indicated by the above-described results, in the product obtained through oxidation (a hop oxidation-reaction product), the ratio of the area of peaks corresponding to α-acids, β-acids and iso-α-acids relative to the total area of all the peaks was greatly decreased and α-acids, β-acids and iso-α-acids were decreased by around 90% as compared with the untreated sample.

Moreover, oxidation caused other peaks, in addition to the peaks corresponding to α-acids, β-acids and iso-α-acids, to emerge. That is, peaks within the range defined by Arrows A1 and A2 in FIG. 1A (excluding the peaks of α-acids and β-acids) fall into this category. The ratio (%) of the area value of peaks within the range defined by Arrows A1 and A2 (excluding the peaks of α-acids and β-acids) relative to the total area value (mAU•min) of all the peaks detected at a detection wavelength of 270 nm was as shown in Table 3.

In addition, the area value of peaks within the range defined by Arrows A1 and A2 is a sum of the area value of peaks within the range defined by A1, which corresponds to a period of retention time ranging from 3 minutes to 25 minutes, and the area value of peaks within the range defined by A2 (excluding the peaks of α-acids and β-acids), which corresponds to a period of retention time ranging from 32 minutes to 39 minutes. Here, the phrase "until a retention time of 25 minutes" in A1 means "until a time point at which a peak identified as *trans*-isocohumulone emerges".

Moreover, characteristic peaks were observed around a retention time of 9.7 minutes, around a retention time of 11.8 minutes, around a retention time of 12.3 minutes within the range defined by Arrow A1 in the left side of FIG. 1A.

Moreover, shoulder peaks were observed within the range defined by Arrow A2 in the right side of FIG. 1A and the starting point was around a retention time of 32 minutes, the peak top points (excluding the peaks of α-acids and β-acids) were within a period of retention time ranging from around 35 minutes to around 36 minutes, and the ending point was around a retention time of 39 minutes.

A group of peaks detected within the range defined by Arrow A1 correspond to oxidation products of α-acids, iso-α-acids and of β-acids of the present specification.

### [Table 3]

**Table 3**

| Reaction conditions | Peak area ratio (%) (the peaks within the range defined by Arrow A1 and Arrow A2/all the peaks) |
|---|---|
| 80°C, 24 hours | 97.0 |
| untreated | 11.1 |

Here, the ratio (%) of the area value of peaks within the range defined by Arrow A1 relative to the total area value of all the peaks was 78.0%.

Quantitative analysis of α-acids, β-acids and iso-α-acids contained in hop or the above-described product (a hop oxidation-reaction product) can be performed by the above-described analytical method. As standard α-acids, β-acids and iso-α-acids for quantitative analysis, for example, Internal Calibration Standards: ICE-2, ICS-I2, ICS-T2, which can be obtained from American Society of Brewing Chemists (ASBC), and the like can be used.

### Quantification of oxidation products of α-acids, oxidation products of iso-α-acids and oxidation products of β-acids in a hop oxidation-reaction product

Moreover, oxidation products of α-acids, oxidation products of iso-α-acids and oxidation products of β-acids contained in a hop oxidation-reaction product were quantified by the above-described analytical method. Specifically, the contents of those components were calculated as a quantitative value converted in terms of iso-α-acids from the total area value of peaks within the range defined by Arrow A1 in FIG. 1A.

Furthermore, oxidation products of α-acids, oxidation products of iso-α-acids and oxidation products of β-acids in an extract of a hop oxidation-reaction product were subjected to a pre-treatment under the following pre-treatment conditions and subsequently quantified by the above-described HPLC analysis method.

### A pre-treatment method for quantitative analysis of oxidation products of α-acids, oxidation products of iso-α-acids and oxidation products of β-acids, and TCOIHs in an extract of a hop oxidation-reaction product

An Extract of a hop oxidation-reaction product was dissolved or suspended in water. Then, the pH was lowered by adding hydrochloric acid to the aqueous solution to a concentration of 0.1 N hydrochloric acid and oxidation products of α-acids, oxidation products of iso-α-acids and oxidation products of β-acids were extracted with dichloromethane in a volume twice as large as that of the aqueous layer. Then, the dichloromethane extraction liquid was collected, dichloromethane was evaporated under nitrogen gas flow, the solvent was replaced with ethanol, and the resulting solution was subjected to HPLC analysis. Quantitative values of oxidation products of α-acids, oxidation products of iso-α-acids and oxidation products of β-acids were calculated by a method described in the above-described quantification method for oxidation products of α-acids, iso-α-acids and β-acids in a hop oxidation-reaction product. Quantification of TCOIHs was performed by a method described in Example 11 below.

Each of oxidation products of α-acids, oxidation products of iso-α-acids and oxidation products of β-acids, and TCOIHs in a beverage, to which an extract of a hop oxidation-reaction product has been added, can be likewise quantified after treatment by the pre-treatment method.

### Example 2: Preparation of an extract of a hop oxidation-reaction product from oxidation products of hops/Removal of unpleasant odors from oxidation products of hops (Preparatory Example)

The oxidized hops of Example 1 contain fatty acids and the like due to the oxidation and it is appreciated that the unpleasant odors cause difficulties to comfortable ingestion. Thus, removal of unpleasant odors was studied.

To 100 g of the product of Example 1, ethanol was added to a volume of 1 L and stirred at 55°C for 1 hour to yield an ethanol extract.

Then, extraction residues were removed by filtration and 22 g of a dark green solid (extract) was obtained through condensation. Unpleasant odors were not identified in the dark green solid (extract).

The extract was diluted and subjected to HPLC analysis to confirm that oxidation products of hops (oxidation products of α-acids, oxidation products of iso-α-acids and oxidation products of β-acids) had been extracted. The ratio (%) of the area value of peaks corresponding to α-acids, β-acids and iso-α-acids relative to the total area value of all the peaks was 3%. The ratio (%) of the area value of peaks within the range defined by Arrow A1 (corresponding to oxidation products of α-acids, oxidation products of iso-α-acids and oxidation products of β-acids) and by Arrow A2 (excluding the peaks of α-acids and β-acids) in FIG. 1 relative to the total area value of all the peaks was 97%. In addition, in a HPLC chart of the dark green solid (extract), peaks with maximum values similar to those in FIG. 1A and shoulder peaks were observed in the same range as defined by Arrow A1 (corresponding to oxidation products of α-acids, oxidation products of iso-α-acids and oxidation products of β-acids) and by Arrow A2 in FIG. 1A.

Moreover, when a sensory evaluation of bitter taste (by 6 panelists) was performed on the dark green solid (an extract of oxidation products of hops) and an unoxidized hop pellet, it was confirmed that the dark green solid (an extract of the hop oxidation-reaction product) has a less bitter taste than the unoxidized hop pellet.

### Example 3: A water-extraction method for oxidized hops (Preparatory Example)

The hops as shown in Example 1 were heated to 60°C and the heating reaction was maintained for a time period of up to 120 hours to obtain oxidized hops. To 100 g of the obtained product, water was added to a volume of 1 L and stirred at 55°C for 1 hour to yield a water extract.

When the extract was subjected to HPLC analysis, extraction of the hop oxidation-reaction product was confirmed. The ratio (%) of the area value of peaks corresponding to α-acids, β-acids and iso-α-acids relative to the total area value of all the peaks was 2%. The ratio (%) of the area value of peaks within the range defined by Arrows A1 and A2 (excluding the peaks of α-acids and β-acids) in FIG. 1A relative to the total area value of all the peaks was 98%. In addition, in a HPLC chart of the extract liquid, peaks with maximum values similar to those in FIG. 1A were observed but shoulder peaks were not observed in the same range as defined by Arrows A1 and A2 (corresponding to oxidation products of α-acids, oxidation products of iso-α-acids and oxidation products of β-acids) in FIG. 1A.

### Example 4: Condensation of an extract of a hop oxidation-reaction product obtained from a water extract (Preparatory Example)

When the water extract of Example 3 was condensed using a spray dryer (B-290; produced by BÜCHI Labotechnik AG), a dark green solid (derived from the water extract) was obtained.

When the extract was diluted and subjected to HPLC analysis to identify the extract of the hop oxidation-reaction product, the extract showed a peak pattern similar to that of the extract before condensation and the ratio (%) of the area value of peaks corresponding to α-acids, β-acids and iso-α-acids relative to the total area value of all the peaks was 2%, which was the same as the ratio before condensation. Moreover, when a sensory evaluation of the flavors of the extracts before and after condensation (by 4 panelists) was performed, any change in flavor was not observed.

### Example 5: Studies on oxidation temperature and oxidation time (Preparatory Example)

Hop pellets were subjected to oxidation at 60°C or 80°C according to the method as shown in Example 1 and products were collected over time and measured by HPLC to calculate Peak Area Ratio 1, which is the ratio of the total area of peaks corresponding to α-acids, β-acids and iso-α-acids relative to the area of all the peaks, and Peak Area Ratio 2, which is the ratio of the area of peaks excluding those corresponding to α-acids, β-acids and iso-α-acids (corresponding to the range defined by Arrows A1 and A2 in FIG. 1A) relative to the area of all the peaks. Moreover, a sensory evaluation was performed on both unheated and heated samples as in Example 2. The results relating to the areas of peaks are as shown below.

### [Table 4]

**Table 4**

| Heating temperature (°C) | Heating time | Peak area ratio 1 (%) | Peak area ratio 2 (%) |
|---|---|---|---|
| unheated | - | 88.9 | 11.1 |
| 60°C | 32 | 26.0 | 74.0 |
| 60°C | 48 | 12.7 | 87.3 |
| 60°C | 120 | 8.0 | 92.0 |
| 80°C | 4 | 25.1 | 74.9 |
| 80°C | 8 | 10.7 | 89.3 |
| 80°C | 24 | 3.0 | 97.0 |

It was found that the value of Peak Area Ratio 2 (the range defined by Arrows A1 and A2 in FIG. 1A: corresponding to oxidation products of α-acids, oxidation products of iso-α-acids and oxidation products of β-acids) was increased and, meanwhile, the value of Peak 1 was decreased as the heating temperature was increased, which were in proportional to reaction temperature and reaction time, and a bitter taste was successfully reduced in an efficient manner. Moreover, in HPLC charts of the heated samples, peaks with maximum values similar to those in FIG. 1A and shoulder peaks were observed in the same range as defined by Arrows A1 and A2 in FIG. 1A.

Moreover, the results of the sensory evaluation confirmed that all the heated samples have a less bitter taste than the unheated (unoxidized) sample.

### Example 6: A study on oxidation at low temperature (Preparatory Example)

Saaz hops were stored at 4°C for 5 years according to the method of Example 1 to perform oxidation. The obtained product was subjected to HPLC analysis.

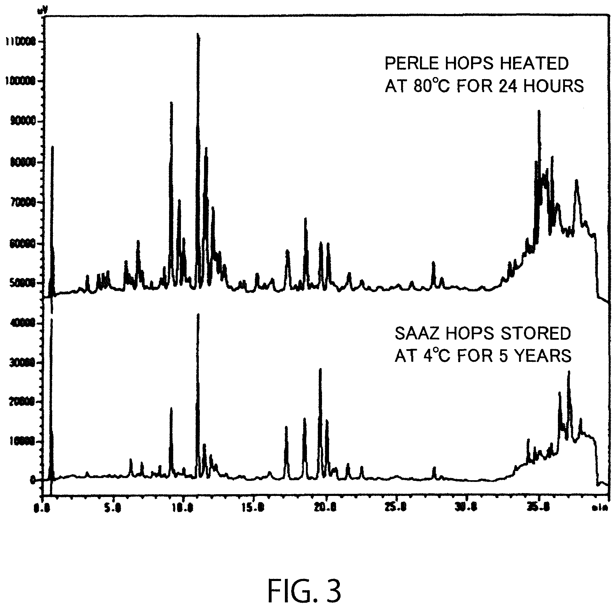

A HPLC analysis chromatogram of the analysis of the above-described product of Example 6 is shown in FIG. 3. It was confirmed that similar products (oxidation products of hops) could be obtained independently of the variety of hop and the reaction temperature.

### Example 7: An improvement test for the quality of foam by an extract of a hop oxidation-reaction product (in non-alcoholic beverages)

A water extract of the oxidized hops (a hop oxidation-reaction product) obtained in Example 4 (hereinafter referred to as "the extract of a hop oxidation-reaction product": in which the ratio (%) of the area value of peaks in HPLC corresponding to α-acids, β-acids and iso-α-acids relative to the area value of all the peaks was 2%) or an isohumulone solution (in which the ratio (%) of the area value of peaks in HPLC corresponding to α-acids, β-acids and iso-α-acids relative to the area value of all the peaks was 100%) was used as a test sample and an effect to improve the quality of foam in non-alcoholic beverages was identified according to the test procedures (1) to (5) below.

### Test procedures

(1) To a solution in which 6% (w/w) high-fructose corn syrup and 0.12% (w/w) citric acid (an acidity of 0.12) had been dissolved, the test samples were added, and the beverage solutions 1 to 5 having the compositions shown in Table 5 were prepared (the concentrations of the extract of a hop oxidation-reaction product and isohumulone are calculated in terms of solids in the water extract).
(2) The pressure of carbon dioxide gas was adjusted to 2.0 kg/cm² in each of the beverage solutions (carbonated beverage solutions). At this step, the measurement of gas pressure was performed using a GVA-500b machine produced by Kyoto Electronics Manufacturing Co., Ltd. The procedures (1) and (2) were conducted at 20°C, which was regarded as room temperature.
(3) The temperature of the solutions was adjusted to 5°C.
(4) Measurement: 100 mL of each carbonated beverage solution was carefully poured at a rate of 2 L/min to a measuring cylinder having a volume of 500 mL (height: 35 cm, outer diameter: 5.5 cm; produced by Iwaki Glass Co., Ltd.) from the position 5 cm above the spout of the measuring cylinder, such that the solution hit the center of the bottom of the measuring cylinder, and the volume of the generated foam was measured by reading the scale on the measuring cylinder. Moreover, a period of time which was required from the completion of pouring the solution until the disappearance of the foam was measured. "The disappearance of the foam" was determined based on the disappearance of the foam from the center of the liquid surface and the confinement of the foam to an area within 1 cm from the circular periphery of the measuring cylinder, determined by observation from the position above the measuring cylinder (in the way of foam to disappear, the height of foam is first reduced so that only bubbles floating on liquid surface are observed. Then, the disappearance of the foam starts from the center of the liquid surface to the circular periphery.).
(5) The extent of improvement in the quality of foam and the flavors were evaluated by 5 panelists. A sense of sparkling (a sensation perceived when drinking a beverage) was determined by discussion by 5 panelists.

### [Table 5]

**Table 5**

| No. | Basic prescription | Extract of a hop oxidation-reaction product | Isohumulone |
|---|---|---|---|
| 1* | 6% (w/w) high-fructose corn syrup | - | - |
| 2 | | 10 ppm | - |
| 3 | 0.12% (w/w) citric acid | 50 ppm | - |
| 4* | 2.0 kg/cm² of carbon dioxide gas pressure | - | 10 ppm |
| 5* | | - | 50 ppm |

| | | | |
|---|---|---|---|
| * Comparative Sample | | | |

Test results were as shown in Table 6.

Both the extract of a hop oxidation-reaction product and isohumulone indicated an effect to improve the amount of foam in the non-alcoholic beverages. Moreover, in cases where the concentration of the extract of a hop oxidation-reaction product was 10 ppm, the amount of foam was increased about 4 times as compared with the non-added sample 1; especially in cases where the concentration was 50 ppm (of the content of oxidation products of α-acids, iso-α-acids and β-acids), the amount of foam was increased about 5 times. The effect was indicated to be significant as compared with an effect in alcoholic beverages as shown in Example 8 below.

On the other hand, foam retention time was improved better by adding the extract of a hop oxidation-reaction product than by adding isohumulone. Especially, in cases where the concentration of the extract of a hop oxidation-reaction product was 50 ppm, the foam retention time was increased 3 times longer as compared with the case where the concentration of isohumulone was 50 ppm.

Moreover, the quality of foam (the appearance of foam) and a sensation perceived when drinking a beverage were also greatly different between the articles to which the extract of a hop oxidation-reaction product was added and the articles to which isohumulone was added. In cases where the extract of a hop oxidation-reaction product was added, the appearance suggestive of champagne with fine bubbles was identified. Moreover, in cases where the extract of a hop oxidation-reaction product was added, any influence on the flavors of the beverages was not identified. On the other hand, in cases where isohumulone was added, the size of bubbles was large, a bitter taste was identified, and a feeling of popping bubbles of carbon dioxide was not identified.

As described above, the extract of a hop oxidation-reaction product had an improving effect at a higher level than isohumulone on foam retention time, the quality of foam and a sensation perceived when drinking a beverage. The extract of a hop oxidation-reaction product received a higher evaluation than isohumulone in the effect to improve the comprehensive quality of foam.

In addition, each of the above-described concentrations of the extract of a hop oxidation-reaction product was defined with the content of α-acids, β-acids and iso-α-acids.

### [Table 6]

**Table 6**

| No. | Test sample | Volume of foam (mL) | Foam retention time (sec.) | Evaluation of appearance | Sensation perceived when drinking a beverage (Sensory evaluation) |
|---|---|---|---|---|---|
| I* | - | 23 | 4 | Large bubbles, which disappear immediately | Large bubbles |
| 2 | Extract of a hop oxidation-reaction product, 10 ppm | 83 | 18 | Large bubbles at the upper side; fine bubbles at the lower side | Slightly suggestive of champagne |
| 3 | Extract of a hop oxidation-reaction product, 50 ppm | 105 | 54 | Finer bubbles than in No. 2; bubbles remaining at the endpoint hardly disappear | Suggestive of champagne; a feeling of fine bubbles popping in the mouth |
| 4* | Isohumulone, 10 ppm | 77 | 12 | A sense of sparkling at the same level as in No. 2 | Large bubbles; bitter |
| 5* | Isohumulone, 50 ppm | 90 | 18 | Larger bubbles than in No. 3, disappearing at the same pace from the beginning to the end | Large bubbles; no feeling of popping bubbles; very bitter |

| | | | | | |
|---|---|---|---|---|---|
| * Comparative Sample | | | | | |

### Example 8: An effect of an extract of a hop oxidation-reaction product to improve the quality of foam (in alcoholic beverages)

The water extract of the oxidized hops obtained in Example 4 (hereinafter referred to as "the extract of a hop oxidation-reaction product": in which the ratio (%) of the area value of peaks in HPLC corresponding to α-acids, β-acids and iso-α-acids relative to the area value of all the peaks was 3%) or an isohumulone solution (in which the ratio (%) of the area value of peaks in HPLC corresponding to α-acids, β-acids and iso-α-acids relative to the area value of all the peaks was 100%) was used as a test sample and an effect to improve a sense of sparkling in alcoholic beverages was identified according to the test procedures (1) to (5) below.

### Test procedures

(1) To a solution in which 6% high-fructose corn syrup, 0.12% citric acid (an acidity of 0.12) and 5% alcohol had been dissolved, the test samples were added, and the beverage solutions 6 to 8 having the compositions shown in Table 7 were prepared (the concentrations of the extract of a hop oxidation-reaction product and isohumulone are calculated in terms of solids in the water extract.).

Hereafter, the measurement of gas pressure, an evaluation method, and the like were performed by procedures similar to those indicated in (2) to (5) of Example 7.

### [Table 7]

**Table 7**

| No. | Basic prescription | Extract of a hop oxidation-reaction product | Isohumulone |
|---|---|---|---|
| 6* | 6% (w/w) high-fructose corn | - | - |
| 7 | syrup | 50 ppm | - |
| 8* | 0.12% (w/w) citric acid | - | 50 ppm |
| | 2.0 kg/cm² of carbon dioxide gas pressure | | |
| | 5% (w/w) alcohol | | |

| | | | |
|---|---|---|---|
| * Comparative Sample | | | |

Test results were as shown in Table 8.

An effect to improve the amount of foam in the alcoholic beverages was indicated in both the article to which the extract of a hop oxidation-reaction product was added and the article to which isohumulone was added. Moreover, in cases where the concentration of the extract of a hop oxidation-reaction product was 50 ppm, the amount of foam was increased about 1.3 times as compared with the non-added sample #1. On the other hand, foam retention time was improved better by adding the extract of a hop oxidation-reaction product than by adding isohumulone, in which the foam retention time in the former was 2.6 times longer than the latter.

Moreover, the quality of foam (the appearance of foam) and a sensation perceived when drinking a beverage were also greatly different between the extract of a hop oxidation-reaction product and isohumulone. In cases where the extract of a hop oxidation-reaction product was added, the appearance suggestive of champagne with fine bubbles was identified. Moreover, in cases where the extract of a hop oxidation-reaction product was added, any influence on the flavors of the beverages was not identified. On the other hand, in cases where isohumulone was added, the size of bubbles was large, a bitter taste was identified, and a feeling of popping bubbles of carbon dioxide was not identified.

As described above, the extract of a hop oxidation-reaction product had an excellent improving effect at a higher level than isohumulone on foam retention time and the quality of foam and the like. The extract of a hop oxidation-reaction product received a higher evaluation than isohumulone in the effect to improve the comprehensive quality of foam.

In addition, each of the above-described concentrations of the extract of a hop oxidation-reaction product was defined with the content of α-acids, β-acids and iso-α-acids.

### [Table 8]

**Table 8**

| No. | Test sample | Volume of foam (mL) | Foam retention time (sec.) | Evaluation of appearance | Sensation perceived when drinking a beverage (Sensory evaluation) |
|---|---|---|---|---|---|
| 6* | - | 67 | 5 | Overall large bubbles | Large bubbles |
| 7 | Hop oxidation-reaction product, 50 ppm | 87 | 68 | Fine and viscous bubbles; bubbles remaining at the endpoint hardly disappear | Suggestive of champagne; a feeling of fine bubbles popping in the mouth |
| 8* | Isohumulone, 50 ppm | 107 | 26 | Bubbles equal to or slightly larger than those in No. 2 | Large bubbles; very bitter |

| | | | | | |
|---|---|---|---|---|---|
| * Comparative Sample | | | | | |

### Example 9: An improvement test for the quality of foam (mixing ratio of the extract of a hop oxidation-reaction product and isohumulone)

The water extract of the oxidized hops obtained in Example 4 (hereinafter referred to as "the extract of a hop oxidation-reaction product": in which the ratio (%) of the area value of peaks in HPLC corresponding to α-acids, β-acids and iso-α-acids relative to the area value of all the peaks was 3%) and an isohumulone solution (in which the ratio (%) of the area value of peaks in HPLC corresponding to α-acids, β-acids and iso-α-acids relative to the area value of all the peaks was 100%) were mixed in predetermined ratios and used as test samples, and an effect to improve the quality of foam was identified in non-alcoholic beverage with the different mixing ratios according to the test procedures (1) to (5) below.

In addition, in this test, the total concentration of the extract of a hop oxidation-reaction product and isohumulone in a beverage was adjusted to 50 ppm (the concentrations of the extract of a hop oxidation-reaction product and isohumulone are calculated in terms of solids in the water extract) and the mixing ratios of the extract of a hop oxidation-reaction product and isohumulone in the test samples were set at 100:0, 80:20, 50:50, 20:80 or 0:100. In addition, each of the concentrations of the extract of a hop oxidation-reaction product was defined with the content of oxidation products of α-acids, iso-α-acids and β-acids.

### Test procedures (1) To a solution in which 6% high-fructose corn syrup and 0.12% citric acid (an acidity of 0.12) had been dissolved, the test samples were added, and the beverage solutions 9 to 14 having the compositions shown in Table 9 were prepared.

The procedures (2) to (5) were performed by the same procedures as described in Example 7.

### [Table 9]

**Table 9**

| No. | Basic prescription | Extract of a hop oxidation-reaction product | Isohumulone |
|---|---|---|---|
| 9* | 6% high-fructose corn syrup | - | - |
| 10 | | 50 ppm | 0 ppm |
| 11 | 0.12% citric acid | 40 ppm | 10 ppm |
| 12 | 2.0 kg/cm² of gas pressure | 25 ppm | 25 ppm |
| 13 | | 10 ppm | 40 ppm |
| 14* | | 0 ppm | 50 ppm |

| | | | |
|---|---|---|---|
| * Comparative Sample | | | |

Test results were as shown in Table 10.

A greater effect to improve the amount of foam in the non-alcoholic beverages was indicated in any of the added articles with different mixing ratios of the extract of a hop oxidation-reaction product and isohumulone (samples #9 to #14) than in the non-added article.

On the other hand, foam retention time was improved better in samples with a larger mixing ratio of the extract of a hop oxidation-reaction product. Moreover, the quality of foam (the appearance of foam) and a sensation perceived when drinking a beverage were also identified to be more suggestive of champagne in details as the mixing ratio of the extract of a hop oxidation-reaction product in a sample increased.

As described above, greater improving effects on foam retention time and the quality of foam and the like were indicated in a sample with a larger mixing ratio of the extract of a hop oxidation-reaction product. The extract of a hop oxidation-reaction product received a higher evaluation than isohumulone in the effect to improve the comprehensive quality of foam. In addition, each of the concentrations of the extract of a hop oxidation-reaction product was defined with the content of oxidation products of α-acids, iso-α-acids and β-acids.

### [Table 10]

**Table 10**

| No. | Test sample | Volume of foam (mL) | Foam retention time (sec.) | Evaluation of appearance | Sensation perceived when drinking a beverage (Sensory evaluation) |
|---|---|---|---|---|---|
| 9* | - | 12 | 3 | Overall large bubbles | Large bubbles |
| 10 | Extract of a hop oxidation-reaction product, 50 ppm Isohumulone, 0 ppm | 112 | 67 | Large bubbles at the upper side; fine bubbles at the lower side; viscous bubbles remaining at the endpoint hardly disappear | Suggestive of champagne; fine bubbles popping in the mouth |
| 11 | Extract of a hop | 112 | 57 | Bubbles finer | Slightly |
| | oxidation-reaction product, 40 ppm Isohumulone, 10 ppm | | | than those in No. 12 but slightly prone to disappear at the upper side | suggestive of champagne; little bitter taste |
| 12 | Extract of a hop oxidation-reaction product, 25 ppm Isohumulone, 25 ppm | 107 | 47 | Bubbles as large as those in No. 13; prone to disappear | More slightly suggestive of champagne; bitter |
| 13 | Extract of a hop oxidation-reaction product, 10 ppm Isohumulone, 40 ppm | 118 | 41 | Slightly large bubbles | Large bubbles; very bitter |
| 14* | Extract of a hop oxidation-reaction product, 0 ppm Isohumulone, 50 ppm | 128 | 30 | Slightly large bubbles, disappearing at the same pace from the beginning to the end | Large bubbles; very bitter |

| | | | | | |
|---|---|---|---|---|---|
| * Comparative Sample | | | | | |

### Example 10: Identification of an effect to improve the quality of foam by the extract of a hop oxidation-reaction product in various beverages

Hallertau Herkules hops (HHS variety) in the shape of a pellet were heated to 60°C and the heating reaction was maintained for a time period of up to 120 hours to obtain a hop oxidation-reaction product. To 50 g of the reaction product, water was added to a volume of 1 L and stirred at 50°C for 30 minutes to yield a water extract (hereinafter referred to as "the extract of a hop oxidation-reaction product").

The above-described extract of a hop oxidation-reaction product (which contains oxidation products of α-acids, oxidation products of iso-α-acids and oxidation products of β-acids; the ratio (%) of the area value of peaks in HPLC corresponding to α-acids, β-acids and iso-α-acids relative to the area value of all the peaks was 3%) was used as a test sample to identify an effect to improve the quality of foam in various beverages according to the following test procedures.

### 10-1: Difference in carbon dioxide gas pressures

### Test procedures

(1) In a solution in which 6% granulated sugar and 0.12% citric acid (an acidity of 0.12) had been dissolved, a predetermined volume of carbon dioxide gas was dissolved to obtain carbonated beverage solutions 15 to 17 (Table 11). Then, the extract of a hop oxidation-reaction product was added to each of the beverage solutions such that the concentration of oxidation products of α-acids, iso-α-acids and β-acids, each derived from the extract of a hop oxidation-reaction product, reached 0 ppm or 50 ppm.

The method of measuring gas pressure and the other evaluation methods were procedures similar to those of (2) to (5) shown in Example 7.

### [Table 11]

**Table 11**

| | Basic prescription | Carbon dioxide gas pressure (kg/cm²) | Note |
|---|---|---|---|
| 15 | 6% granulated sugar | 1.5 | Low gas pressure |
| 16 | | 2.5 | Moderate gas pressure |
| 17 | 0.12% citric acid | 3.6 | High gas pressure |

Test results were as shown in Table 12.

Adding the extract of a hop oxidation-reaction product increased the volume of bubbles (the amount of foam) 7-10 times larger and the foam retention time 100-200 times longer in each gas pressure and, thus, the increase in foam volume and foam retention time was confirmed. Moreover, the quality of foam (the appearance of foam) and a sensation perceived when drinking a beverage were also excellent in the articles to which the extract of a hop oxidation-reaction product was added. Accordingly, an effect to improve the quality of foam by adding the extract of a hop oxidation-reaction product was confirmed.

As described above, an effect to improve the quality of foam by adding the extract of a hop oxidation-reaction product was suggested to be manifested in a carbonated beverage having any gas pressure.

### [Table 12]

**Table 12**

| No. | Carbon dioxide gas pressure (kg/cm²) | Volume of foam (ml) | | Foam retention time (sec.) | |
|---|---|---|---|---|---|
| | | Addition of the extract of a hop oxidation-reaction product | No addition of the extract of a hop oxidation-reaction product* | No addition of hops | Addition of hops |
| 15 | 1.5 | 77 | 10 | 4 | 548 |
| 16 | 2.5 | 170 | 23 | 3 | 368 |
| 17 | 3.6 | 260 | 23 | 2 | 467 |

| | | | | | |
|---|---|---|---|---|---|
| * Comparative Sample | | | | | |

### 10-1: Difference in sweetener

### Test procedures

(1) To a solution in which 0.12% citric acid (an acidity of 0.12) had been dissolved, granulated sugar or an artificial sweetener (acesulfame-K) was added as a sweetener to prepare the beverage solutions 18 to 20 having the compositions shown in Table 13. Then, the extract of a hop oxidation-reaction product was added to each of the beverage solutions such that the concentration of oxidation products of α-acids, iso-α-acids and β-acids, each derived from the extract of a hop oxidation-reaction product, reached 0 ppm or 50 ppm.

The method of measuring gas pressure and the other evaluation methods were procedures similar to those of (2) to (5) shown in Example 7.

### [Table 13]

**Table 13**

| | Basic prescription | Granulated sugar (%) | Artificial sweetener (acesulfame-K) (%) | Note |
|---|---|---|---|---|
| 18 | 0.12% citric acid | 0 | - | Non-sugar carbonated beverage |
| 19 | 2.5 kg/cm² of carbon dioxide gas pressure | 10 | - | Sugar-containing carbonated beverage |
| 20 | | - | 0.05 | No-carbohydrate carbonated beverage |

Test results were as shown in Table 14.

Adding the extract of a hop oxidation-reaction product increased the volume of bubbles (the amount of foam) 7-15 times larger and the foam retention time 70-200 times longer in each sweetener-added article and, thus, the increase in foam volume and foam retention time was confirmed.

Moreover, the quality of foam (the appearance of foam) and a sensation perceived when drinking a beverage were also excellent in the articles to which the extract of a hop oxidation-reaction product was added. Accordingly, an effect to improve the quality of foam by adding the extract of a hop oxidation-reaction product was confirmed.

As described above, an effect to improve the quality of foam by adding the extract of a hop oxidation-reaction product was suggested to be manifested in a carbonated beverage containing any sweetener.

### [Table 14]

**Table 14**

| No. | Test sample | Volume of foam (ml) | | Foam retention time (sec.) | |
|---|---|---|---|---|---|
| | | No addition of the extract of a hop oxidation-re action product* | Addition of the extract of a hop oxidation-reac tion product | No addition of the extract of a hop oxidation-reac tion product* | Addition of the extract of a hop oxidation-r eaction product |
| 18 | Granulated sugar, 0% | 23 | 170 | 3 | 368 |
| 19 | Granulated sugar, 10% | 10 | 157 | 2 | 402 |
| 20 | Artificial sweetener (acesulfame-K), 0.05% | 13 | 177 | 2 | 140 |

| | | | | | |
|---|---|---|---|---|---|
| * Comparative Sample | | | | | |

### 10-3: Difference in combined raw materials

### Test procedures

(1) Using 6% granulated sugar, 0.12% citric acid (an acidity of 0.12), and grapefruit juice, malt extract, black tea extract, or flavors as raw materials, the carbonated beverage solutions 21 to 24 having the compositions shown in Table 15 were prepared. Then, the extract of a hop oxidation-reaction product was added to each of the beverage solutions such that the concentration of oxidation products of α-acids, iso-α-acids and β-acids, each derived from the extract of a hop oxidation-reaction product, reached 0 ppm or 50 ppm.

The method of measuring gas pressure and the other evaluation methods were procedures similar to those of (2) to (5) shown in Example 7.

### [Table 15]

**Table 15**

| | Basic prescription | Grapefruit juice (%( | Malt extract (%) | Black tea extract (%) | Flavors (%) | Note |
|---|---|---|---|---|---|---|
| 21 | 6% granulated sugar | 10 | - | - | - | Carbonated beverage with fruit juice |
| 22 | 0.12% citric acid | - | 0.25 | - | - | Non-alcoholic beer-taste carbonated beverage |
| | 2.5 kg/cm² of carbon | | | | | |
| 23 | dioxide gas pressure | - | - | 0.1 | - | Carbonated black tea |
| 24 | | - | - | - | 0.1 | General refreshing beverage |

Test results were as shown in Table 16.

Adding the extract of a hop oxidation-reaction product increased the volume of bubbles (the amount of foam) 1.2-1.7 times larger and the foam retention time 1.2-40 times longer in each set of raw materials and, thus, the increase in foam volume and foam retention time was confirmed.

Moreover, the quality of foam (the appearance of foam) and a sensation perceived when drinking a beverage were also excellent in the articles to which the extract of a hop oxidation-reaction product was added. Accordingly, an effect to improve the quality of foam by adding the extract of a hop oxidation-reaction product was confirmed.

As described above, an effect to improve the quality of foam by adding the extract of a hop oxidation-reaction product was suggested to be manifested in a carbonated beverage derived from any raw materials.

### [Table 16]

**Table 16**

| No. | Test sample | Volume of foam (ml) | | Foam retention time (sec.) | |
|---|---|---|---|---|---|
| | | No addition of the extract of a hop oxidation-reaction product* | Addition of the extract of a hop oxidation-reaction product | No addition of the extract of a hop oxidation-re action product* | Addition of the extract of a hop oxidation-re action product |
| 21 | Grapefruit juice, 10% | 100 | 177 | 63 | 244 |
| 22 | Malt extract, 0.25% | 110 | 157 | 334 | 463 |
| 23 | Black tea extract, 0.1% | 90 | 107 | 273 | 320 |
| 24 | Flavors, 0.1% | 63 | 153 | 7 | 268 |

| | | | | | |
|---|---|---|---|---|---|
| * Comparative Sample | | | | | |

### 10-4: Difference in pH

### Test procedures

(1) The beverage solutions 25 to 26 having the compositions shown in Table 17, to which 6% granulated sugar, and citric acid or trisodium citrate had been added, were prepared. Then, the extract of a hop oxidation-reaction product was added to each of the beverage solutions such that the concentration of oxidation products of α-acids, iso-α-acids and β-acids, each derived from the extract of a hop oxidation-reaction product, reached 0 ppm or 50 ppm.

The method of measuring gas pressure and the other evaluation methods were procedures similar to those of (2) to (5) shown in Example 7.

### [Table 17]

**Table 17**

| | Basic prescription | Citric acid (%) | Trisodium citrate (%) | Note |
|---|---|---|---|---|
| 25 | 6% granulated sugar | 0.12 | - | pH 3.5 |
| 26 | | - | 0.12 | pH 7.0 |
| | 2.5 kg/cm² of carbon dioxide gas pressure | | | |

Test results were as shown in Table 18.

Adding the extract of a hop oxidation-reaction product increased the volume of bubbles (the amount of foam) 7-14 times larger and the foam retention time 100-120 times longer in each pH and, thus, the increase in foam volume and foam retention time was confirmed. Moreover, the quality of foam (the appearance of foam) and a sensation perceived when drinking a beverage were also excellent in the articles to which the extract of a hop oxidation-reaction product was added. Accordingly, an effect to improve the quality of foam by adding the extract of a hop oxidation-reaction product was confirmed.

As described above, an effect to improve the quality of foam by adding the extract of a hop oxidation-reaction product was suggested to be manifested in a carbonated beverage at any pH.

### [Table 18]

**Table 18**

| No. | Test sample | Volume of foam (ml) | | Foam retention time (sec.) | |
|---|---|---|---|---|---|
| | | No addition of the extract of a hop oxidation-re action product* | Addition of the extract of a hop oxidation-re action product | No addition of the extract of a hop oxidation-re action product* | Addition of the extract of a hop oxidation-re action product |
| 25 | 0.12% citric acid | 23 | 170 | 3 | 368 |
| 26 | 0.12% Trisodium citrate | 13 | 183 | 2 | 203 |

| | | | | | |
|---|---|---|---|---|---|
| * Comparative Sample | | | | | |

### Example 11: Analysis of TCOIH, a component within oxidation products of α-acids, oxidation products of iso-α-acids and oxidation products of β-acids, each derived from a hop oxidation-reaction product

It was confirmed that tricyclooxyisocohumulone (TCOIcoH: Formula 1), tricyclooxyisohumulone (TCOIH: Formula 2), and tricyclooxyisoadhumulone (TCOIadH: Formula 3) were contained as components within oxidation products of α-acids, oxidation products of iso-α-acids and oxidation products of β-acids in a hop oxidation-reaction product or an extract thereof (in the present specification, TCOIcoH, TCOIH and TCOIadH are collectively referred to as TCOIHs, as described above).

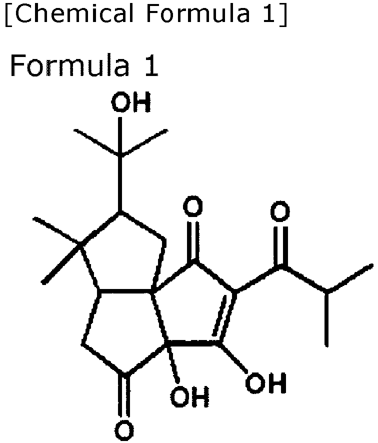

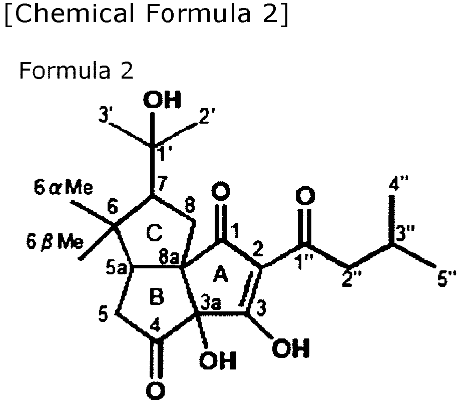

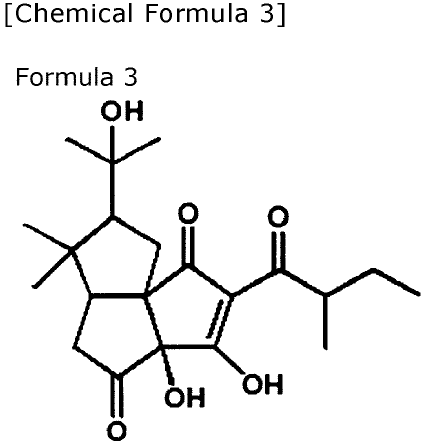

By a known fractionation technique such as chromatography, TCOIHs were isolated and purified from a hop oxidation-reaction product.

From the result of exact mass measurement for the isolated TCOIH (m/z 377.1964 [M-H]-, calcd. for C₂₁H₂₉O₆, 377.1970) out of TCOIHs, the molecular formula of TCOIH was estimated to be C₂₁H₃₀O₆.

Moreover, the results of 1H-NMR analysis and 13C-NMR analysis for TCOIH were as shown in Table 19. Furthermore, the planar structure of TCOIH was determined from the results of a variety of two-dimensional NMR measurements.

### [Table 19-1]

**Table 19**

| 1H NMR (400 MHz, CD3OD),13C NMR (100 MHz, CD3OD) | | |
|---|---|---|
| position | 1H | 13C |
| 1 | - | 208.3 |
| 2 | - | 111.9 |
| 3 | - | 196.7 |
| 3a | - | 86.0 |
| 4 | - | 213.3 |
| 5 | 2.42 (1H, dd, *J* = 18.0,9.2 Hz), 2.22 (1H, d, *J* = 18.0 Hz) | 36.2 |
| 5a | 2.49 (1H,d,*J* = 9.2 Hz) | 56.3 |
| 6 | - | 46.3 |
| 6αMe | 0.72 (3H, s) | 17.5 |
| 6βMe | 1.16 (3H, s) | 29.5 |
| 7 | 2.09 (1H, m) | 61.7 |
| 8 | 2.32 (1H, dd, *J* = 13.0,13.0 Hz), 1.98 (1H, dd, *J* = 13.0,7.2 Hz) | 30.7 |
| 8a | - | 59.4 |
| 1' | - | 73.3 |
| 2' | 1.31 (3H, s) | 30.3 |
| 3' | 1.27 (3H, s) | 30.6 |
| 1" | - | 201.5 |
| 2" | 2.76 (1H, dd, *J* = 14.6,6.7 Hz) | 48.6 |
| | 2.72 (1H, dd, *J* = 14.6,7.0 Hz) | |
| 3" | 2.11 (1H,m) | 26.6 |
| 4" | 0.94 (3H, d, *J* = 6.6 Hz) | 23.0 |
| 5" | 0.94 (3H, d, *J* = 6.6 Hz) | 22.9 |

Moreover, from the chemical shift values for methyl groups at positions 6α and 6β and the result of the NOESY measurement, the 1-hydroxy-1-methylethyl group at position 7 was suggested in terms of the relative configuration of the carbon ring to be in the βconfiguration as shown in Formula 4.

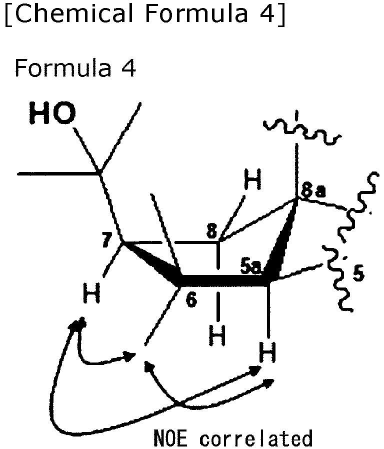

Quantification of TCOIHs in hop oxidation-reaction products or extracts thereof, or beverages comprising the extracts can be performed using an isolated and purified TCOIH preparation as a standard by a technique such as HPLC or LC-MS. An example analysis of TCOIHs in a hop oxidation-reaction product will be indicated below.

### [HPLC conditions]

Column: L-column2, 2.1 mm I.D. × 150 mm, particle size: 3 µm
Flow rate: 0.375 mL/min
Elution solvents A: 5 mM ammonium formate (pH 8.5)
Elution solvents B: acetonitrile
Injection volume: 3 µL
Column temperature: 40°C
Detection wavelength: 270 nm
Gradient program:

**[Table 19-2]**

| Time (min) | %B |
|---|---|
| 0 | 10 |
| 39 | 36 |
| 44 | 80 |
| 52 | 80 |
| 53 | 10 |
| 61 | STOP |

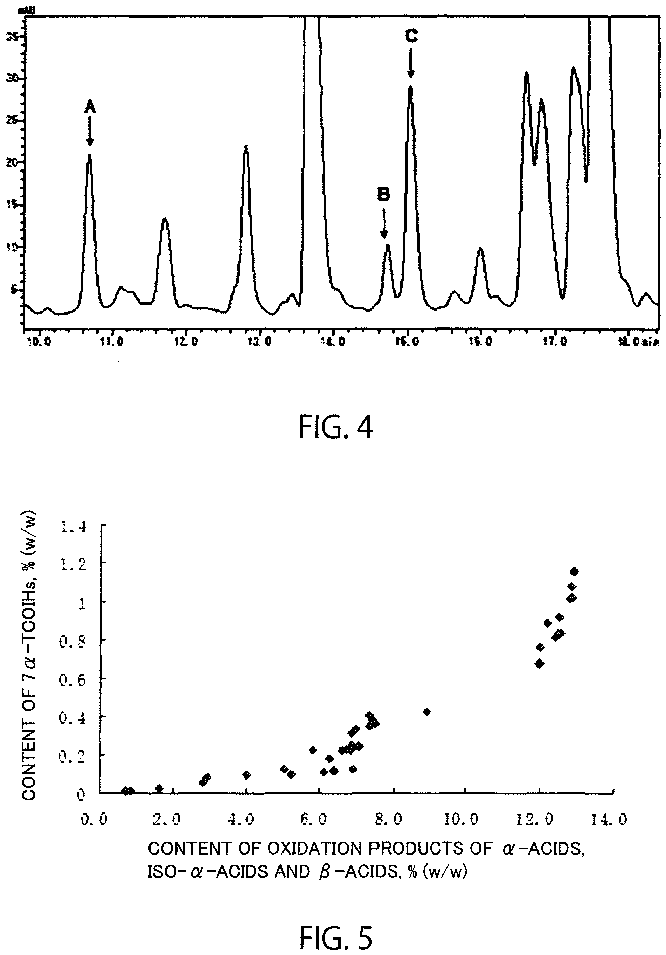

A hop oxidation-reaction product obtained by subjecting hops to oxidation at 60°C for 120 hours was pre-treated as described in Example 1 and subsequently analyzed under the HPLC conditions described above. The result of the analysis is shown in FIG. 4. In FIG. 4, the letter A corresponds to TCOIcoH, the letter B corresponds to TCOIadH, and the letter C corresponds to TCOIH.

Example 12: Quantification of oxidation products of α-acids, oxidation products of iso-α-acids and oxidation products of β-acids, and of TCOIHs in a hop oxidation-reaction product

The contents of oxidation products of α-acids, oxidation products of iso-α-acids and oxidation products of β-acids, and of TCOIHs, all of which are contained in hop oxidation-reaction products, increase as oxidation of hops proceeds further. The content of oxidation products of α-acids, iso-α-acids and β-acids and the content of TCOIHs, all of which were contained in hop oxidation-reaction products obtained by subjecting hops to oxidation under various conditions, were plotted in FIG. 5.

A correlation (correlation coefficient: r = 0.939) was identified between the content of oxidation products of α-acids, iso-α-acids and β-acids and the content of TCOIHs, all of which were contained in the hop oxidation-reaction products.

Moreover, the ratio of the content of TCOIHs relative to the content of oxidation products of α-acids, iso-α-acids and β-acids in an extract of a hop oxidation-reaction product was in a range of about 1.5-20% by mass, although the ratio varied according to the variety of hops and oxidation conditions used for preparation of the hop oxidation-reaction products and extraction conditions used for the extracts.

### Example 13: The stabilities of oxidation products of α-acids, iso-α-acids and β-acids, and of TCOIHs, each derived from a hop oxidation-reaction product, in a beverage

A carbonated beverage (with a carbon dioxide gas pressure of 2.5 kg/cm²) at pH 3.4 was prepared by using the extract of a hop oxidation-reaction product, which was adjusted in Example 10, at a concentration of 0.6%, citric acid at a concentration of 0.08% and trisodium citrate at a concentration of 0.03%, and was subjected to sterilization at a level similar to that at 65°C for 10 minutes and subsequently stored in the dark after heating or sored in the light after heating. Then, the concentration of oxidation products of α-acids, iso-α-acids and β-acids and the concentration of TCOIHs in the beverage were quantified by the methods described in Examples 1 and 11. The result is shown in Table 20.

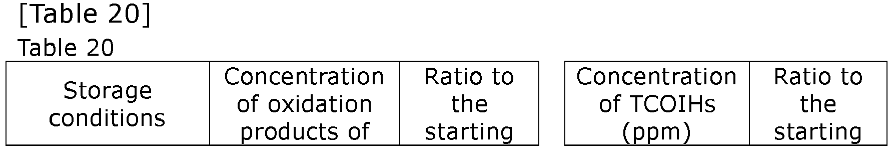

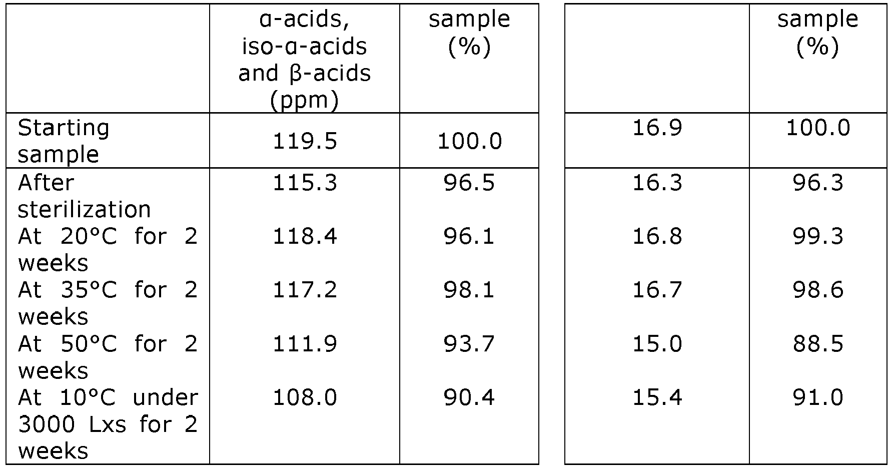

Each of oxidation products of α-acids, oxidation products of iso-α-acids and oxidation products of β-acids, and TCOIHs, all of which were derived from a hop oxidation-reaction product, was stable in the beverage and, thus, it was suggested that an effect to improve foam retention was maintained over a long time period.

### Example 14: The concentrations of oxidation products of α-acids, iso-α-acids and β-acids, and of TCOIHs in a hop oxidation-reaction product and an effect to improve the quality of foam

By using the extract of a hop oxidation-reaction product adjusted in Example 10, the relationship between the added amount of the extract and the effect to improve the quality of foam was evaluated.

### Test procedures

(1) To a solution in which 6% granulated sugar and 0.12% citric acid (an acidity of 0.12) had been dissolved, the extract of a hop oxidation-reaction product was added such that the concentration of oxidation products of α-acids, iso-α-acids and β-acids in a beverage, all of which were derived from the extract, reached in a range of 1-1000 ppm, and the beverage solutions 27 to 34 were provided (Table 21).

The method of measuring gas pressure and the other evaluation methods were procedures similar to those of (2) to (5) shown in Example 7.

### [Table 21]

**Table 21**

| | Basic prescription | oxidation products of α-acids, iso-α-acids and β-acids |
|---|---|---|
| 27* | 6% granulated sugar | 0 ppm |
| 28* | | 1 ppm |
| 29* | | 3 ppm |
| 30 | 0.12% citric acid | 10 ppm |
| 31 | 2.5 kg/cm² of carbon dioxide gas pressure | 50 ppm |
| 32 | | 100 ppm |
| 33* | | 500 ppm |
| 34* | | 1000 ppm |

| | | |
|---|---|---|
| * Comparative Sample | | |

Test results were as shown in Table 22.

By adding oxidation products of α-acids, iso-α-acids and β-acids to a concentration between 1-1000 ppm (a concentration between 0.141-141 ppm in terms of TCOIHs), the amount of foam increased 3-150 times larger and the foam retention time increased 100-120 or more times longer in a concentration-dependent manner.

That is, oxidation products of iso-α-acids and β-acids at a concentration in a range of 1-1000 ppm (a concentration in a range of 0.141-141 ppm in terms of TCOIHs) indicated an effect to improve the quality of foam. In view of the influence on appearance and taste, the quality of foam (the appearance of foam, data not shown) and a sensation perceived when drinking a beverage were in a tendency to decrease at 1000 ppm (a concentration of 141 ppm in terms of TCOIHs) and, therefore, it was appreciated that a concentration in a range of 1-500 ppm (a concentration in a range of 0.141-70.5 ppm in terms of TCOIHs) was preferable. Moreover, since a good bitter taste positively affected a sense of sparkling and could be accepted even by consumers who do not like a bitter taste, it was appreciated that a concentration in a range of 10-400 ppm (a concentration in a range of 0.141-56.4 ppm in terms of TCOIHs), furthermore a concentration in a range of 50-400 ppm (a concentration in a range of 7.191-56.4 ppm in terms of TCOIHs) was preferable.

### [Table 22]

**Table 22**

| No. | Concentration of test sample (oxidation products of o-acids, oxidation products of iso-o-acids and oxidation products of β-acids) | Concentration of TCOHIs (ppm) | Volume of foam (ml) | Foam retention time (sec.) | Sensation perceived when drinking a beverage (Bitter taste) |
|---|---|---|---|---|---|
| 27* | 0 ppm | 0 ppm | 13 | 2 | |
| 28* | 1 ppm | 0.141 ppm | 37 | 7 | Providing a sense of sparkling and almost no feeling of body |
| 29* | 3 ppm | 0.423 ppm | 83 | 43 | Providing a sense of sparkling and a slight feeling of body |
| 30 | 10 ppm | 1.41 ppm | 107 | 103 | Increasing a sense of sparkling and providing a feeling of body |
| 31 | 50 ppm | 7.05 ppm | 183 | 280 | Increasing a sense of sparkling and imparting a slight bitter taste and increasing a feeling of body |
| 32 | 100 ppm | 14.1 ppm | 170 | 368 | Increasing a sense of sparkling and imparting a fresh bitter taste and increasing a feeling of body |
| 33* | 500 ppm | 70.5 ppm | 233 | 460 | Increasing a sense of sparkling and a feeling of body, but providing a taste as bitter as beer and being hard to be accepted by children |
| 34* | 1000 ppm | 141 ppm | 213 | 450 | Providing a good sense of sparkling, but providing a strong bitter taste at such a level that difficulties in drinking are recognized |

| | | | | | |
|---|---|---|---|---|---|
| * Comparative Sample | | | | | |

### Example 15: The concentration of TCOIHs and an effect to improve the quality of foam

Extracts of multiple hop oxidation-reaction products were provided and the concentration of TCOIHs and the effect to improve the quality of foam were evaluated in the extracts.

### [Samples]

(i) A beverage comprising an extract of oxidation products of hops (oxidation products of α-acids, oxidation products of iso-o-acids and oxidation products of β-acids) derived from HPE pellets, which have undergone aging at 20°C, at a concentration of 1 ppm or 10 ppm (comprising TCOIHs at a concentration of 0.038 ppm or 0.38 ppm).
(ii) A beverage comprising an extract of oxidation products of hops (oxidation products of α-acids, oxidation products of iso-o-acids and oxidation products of β-acids) derived from HPE pellets, which have undergone aging at 4°C, at a concentration of 10 ppm (comprising TCOIHs at a concentration of 0.36 ppm).
(iii) A beverage comprising an extract of oxidation products of hops (oxidation products of α-acids, oxidation products of iso-o-acids and oxidation products of β-acids) derived from HHS pellets, which have undergone aging at 80°C, at a concentration of 500 ppm (comprising TCOIHs at a concentration of 105 ppm).

### [Test procedures]

(1) To a solution in which 6% granulated sugar and 0.12% citric acid (an acidity of 0.12) had been dissolved, the test samples were added, and the beverage solutions 35 to 39 having the compositions shown in Table 23 were prepared.

The method of measuring gas pressure and the other evaluation methods were procedures similar to those of (2) to (5) shown in Example 7.

### [Table 23]

**Table 23**

| | Basic prescription | oxidation products of α-acids, iso-α-acids and β-acids | TCOHIs | Note |
|---|---|---|---|---|
| 35* | 6% granulated sugar | 0 ppm | 0 ppm | - |
| 36* | | 1 ppm | 0.038 ppm | HPE aged at 20°C |
| 37 | 0.12% citric acid | 10 ppm | 0.38 ppm | HPE aged at 4°C |
| 38 | 2.5 kg/cm² of carbon dioxide gas pressure | 10 ppm | 0.36 ppm | HPE aged at 20°C |
| 39* | | 500 ppm | 105 ppm | HHS aged at 80°C |

| | | | | |
|---|---|---|---|---|
| * Comparative Sample | | | | |

Test results were as shown in Table 24. In the beverages to which TCOIHs were added to a concentration in a range of 0.038-105 ppm, the amount of foam increased 6-11 times larger and the foam retention time increased 4-90 or more times longer in a concentration-dependent manner.

That is, in the beverages to which TCOIHs were added to a concentration in a range of 0.038-105 ppm, an effect to improve the quality of foam was indicated.

In view of the influence on appearance and taste, the quality of foam (the appearance of foam, data not shown) and a sensation perceived when drinking a beverage were in a tendency to decrease at 105 ppm and, therefore, it was appreciated that a concentration of less than 80 ppm in a beverage is preferable.

### [Table 24]

**Table 24**

| No. | Test sample | Concentration of TCOHIs (ppm) | Volume of foam (ml) | Foam retention time (sec.) | Sensation perceived when drinking a beverage (Bitter taste) |
|---|---|---|---|---|---|
| 35* | No addition of hops | 0 ppm | 13 | 2 | |
| 36* | Use of HPE aged at 20°C | 0.038 ppm | 87 | 9 | Providing no bitter taste and increasing a feeling of body |
| 37 | Use of HPE aged at 4°C | 0.38 ppm | 127 | 96 | Providing no bitter taste and increasing a feeling of body |
| 38 | Use of HPE aged at 20°C | 0.36 ppm | 127 | 115 | Providing a slight bitter taste and increasing a feeling of body |
| 39* | Use of HHS aged at 80°C | 105 ppm | 147 | 183 | Providing a bitter taste at such a level that difficulties in drinking are recognized |

## Claims

1. An effervescent beverage which provides foam with improved quality, comprising a hop oxidation-reaction product, wherein the hop oxidation reaction product is an extract of a hop oxidation reaction product wherein said extract is obtainable by subjecting oxidized hops to extraction with water, water-containing organic solvents or polar organic media such as ethanol, and
wherein the amount of said extract is such that the total content of oxidation products of α-acids, oxidation products of iso-o-acids and oxidation products of β-acids in the beverage is 10-400 ppm and/or wherein the concentration of the hop oxidation-reaction product in the beverage is in the range of 10-500 ppm.

2. The effervescent beverage according to claim 1, wherein the ratio of the area of peaks corresponding to iso-o-acids, α-acids and β-acids relative to the total area of all the peaks detected by HPLC analysis is not more than 20% in the hop oxidation-reaction product.

3. The effervescent beverage according to any one of claims 1 to 2, wherein the extract of a hop oxidation-reaction product is an aqueous medium extract of a hop oxidation-reaction product.

4. A method of producing an effervescent beverage which provides foam with improved quality, comprising the step of allowing the beverage to contain a hop oxidation-reaction product, wherein the hop oxidation reaction product is an extract of a hop oxidation reaction product wherein said extract is obtainable by subjecting oxidized hops to extraction with water, water-containing organic solvents or polar organic media such as ethanol, and
wherein the amount of said extract is such that the total content of oxidation products of α-acids, oxidation products of iso-o-acids and oxidation products of β-acids in the beverage is 10-400 ppm.

5. Use of an extract of a hop oxidation-reaction product as an agent for improving the quality of foam for an effervescent beverage, wherein the hop oxidation reaction product is an extract of a hop oxidation reaction product wherein said extract is obtainable by subjecting oxidized hops to extraction with water, water-containing organic solvents or polar organic media such as ethanol, and
wherein the amount of said extract is such that the total content of oxidation products of α-acids, oxidation products of iso-o-acids and oxidation products of β-acids in the beverage is 10-400 ppm.

6. The use according to claim 5, wherein the extract of a hop oxidation-reaction product is an aqueous medium extract of a hop oxidation-reaction product.

## Patentansprüche

1. Brausegetränk, das Schaum mit verbesserter Qualität liefert, umfassend ein Hopfenoxidationsreaktionsprodukt, wobei das Hopfenoxidationsreaktionsprodukt ein Extrakt eines Hopfenoxidationsreaktionsprodukts ist, wobei der Extrakt erhältlich ist durch Unterziehen von oxidiertem Hopfen einer Extraktion mit Wasser, wasserhaltigen organischen Lösungsmitteln oder polaren organischen Medien wie Ethanol, und
wobei die Menge des Extrakts so ist, dass der Gesamtgehalt an Oxidationsprodukten von α-Säuren, Oxidationsprodukten von Iso-α-Säuren und Oxidationsprodukten von β-Säuren in dem Getränk 10-400 ppm beträgt und/oder wobei die Konzentration des Hopfenoxidationsreaktionsprodukts im Getränk im Bereich von 10-500 ppm liegt.

2. Brausegetränk gemäß Anspruch 1, wobei das Verhältnis der Fläche der Peaks, die Iso-α-Säuren, α-Säuren und β-Säuren entsprechen, zur Gesamtfläche aller durch HPLC-Analyse nachgewiesenen Peaks nicht mehr als 20 % im Hopfenoxidationsreaktionsprodukt beträgt.

3. Brausegetränk gemäß mindestens einem der Ansprüche 1 bis 2, wobei der Extrakt eines Hopfenoxidationsreaktionsprodukts ein wässriger Medium-Extrakt eines Hopfenoxidationsreaktionsprodukts ist.

4. Verfahren zur Herstellung eines Brausegetränks das Schaum mit verbesserter Qualität liefert, umfassend den Schritt, dass man das Getränk ein Hopfenoxidationsreaktionsprodukt enthalten lässt, wobei das Hopfenoxidationsreaktionsprodukt ein Extrakt eines Hopfenoxidationsreaktionsprodukts ist, wobei der Extrakt erhältlich ist, durch Unterziehen von oxidiertem Hopfen einer Extraktion mit Wasser, wasserhaltigen organischen Lösungsmitteln oder polaren organischen Medien wie Ethanol, und
wobei die Menge des Extrakts so ist, dass der Gesamtgehalt an Oxidationsprodukten von α-Säuren, Oxidationsprodukten von Iso-α-Säuren und Oxidationsprodukten von β-Säuren in dem Getränk 10-400 ppm beträgt.

5. Verwendung eines Extrakts eines Hopfenoxidationsreaktionsprodukts als Mittel zur Verbesserung der Qualität von Schaum für ein Brausegetränk, wobei das Hopfenoxidationsreaktionsprodukt ein Extrakt eines Hopfenoxidationsreaktionsprodukts ist, wobei der Extrakt erhältlich ist, durch Unterziehen von oxidiertem Hopfen einer Extraktion mit Wasser, wasserhaltigen organischen Lösungsmitteln oder polaren organischen Medien wie Ethanol, und
wobei die Menge des Extrakts so ist, dass der Gesamtgehalt an Oxidationsprodukten von α-Säuren, Oxidationsprodukten von Iso-α-Säuren und Oxidationsprodukten von β-Säuren in dem Getränk 10-400 ppm beträgt.

6. Verwendung gemäß Anspruch 5, wobei der Extrakt eines Hopfenoxidationsreaktionsprodukts ein wässriger Medium-Extrakt eines Hopfenoxidationsreaktionsprodukts ist.

## Revendications

1. Boisson effervescente qui procure une mousse de qualité améliorée, comprenant un produit de réaction d'oxydation du houblon, dans laquelle le produit de réaction d'oxydation du houblon est un extrait d'un produit de réaction d'oxydation du houblon, dans laquelle ledit extrait peut être obtenu en soumettant le houblon oxydé à une extraction avec de l'eau, des solvants organiques contenant de l'eau ou des milieux organiques polaires tels que l'éthanol, et
dans laquelle la quantité dudit extrait est telle que la teneur totale en produits d'oxydation des α-acides, en produits d'oxydation des iso-α-acides et en produits d'oxydation des β-acides dans la boisson est de 10 à 400 ppm et/ou dans laquelle la concentration du produit de réaction d'oxydation du houblon dans la boisson est dans la plage de 10 à 500 ppm.

2. Boisson effervescente selon la revendication 1, dans laquelle le rapport de la surface des pics correspondant aux iso-α-acides, α-acides et β-acides par rapport à la surface totale de tous les pics détectés par analyse par CLHP n'est pas supérieur à 20 % dans le produit de réaction d'oxydation du houblon.

3. Boisson effervescente selon l'une quelconque des revendications 1 à 2, dans laquelle l'extrait d'un produit de réaction d'oxydation du houblon est un extrait en milieu aqueux d'un produit de réaction d'oxydation du houblon.

4. Méthode de production d'une boisson effervescente qui procure une mousse de qualité améliorée, comprenant l'étape consistant à laisser la boisson contenir un produit de réaction d'oxydation du houblon, dans laquelle le produit de réaction d'oxydation du houblon est un extrait d'un produit de réaction d'oxydation du houblon, dans laquelle ledit extrait peut être obtenu en soumettant le houblon oxydé à une extraction avec de l'eau, des solvants organiques contenant de l'eau ou des milieux organiques polaires tels que l'éthanol, et dans laquelle la quantité dudit extrait est telle que la teneur totale en produits d'oxydation des α-acides, en produits d'oxydation des iso-α-acides et en produits d'oxydation des β-acides dans la boisson est de 10 à 400 ppm.

5. Utilisation d'un extrait d'un produit de réaction d'oxydation du houblon comme agent pour améliorer la qualité de la mousse pour une boisson effervescente, dans laquelle le produit de réaction d'oxydation du houblon est un extrait d'un produit de réaction d'oxydation du houblon, dans laquelle ledit extrait peut être obtenu en soumettant un houblon oxydé à une extraction avec de l'eau, des solvants organiques contenant de l'eau ou des milieux organiques polaires tels que l'éthanol, et
dans laquelle la quantité dudit extrait est telle que la teneur totale en produits d'oxydation des α-acides, en produits d'oxydation des iso-α-acides et en produits d'oxydation des β-acides dans la boisson est de 10 à 400 ppm.

6. Utilisation selon la revendication 5, dans laquelle l'extrait d'un produit de réaction d'oxydation du houblon est un extrait en milieu aqueux d'un produit de réaction d'oxydation du houblon.
